# EUROPEAN PATENT APPLICATION

(11) **EP 1 325 875 A2**
(43) Date of publication of application: **09.07.2003**
(21) Application number: 02028893.2
(22) Date of filing: 23.12.2002
(51) Int. Cl.: B65D 51/00, A61J 1/00

(54) **Versatile vial and plug system**

(30) Priority: 27.12.2001 US 343760 P; 17.12.2002 US 320981 P
(71) Applicant: J.G. FINNERAN ASSOCIATES, INC., Vineland, NJ 08360 (US)
(72) Inventor: Finneran, James G., Vineland, New Jersey 08360 (US)
(74) Representative: Cantaluppi, Stefano

(57) **Abstract**

A versatile vial and plug combination (50) forming a securely sealed closure of the vial (10). The combination (50) includes a vial with (a) a head (12) with an inner diameter (ID) and an outer diameter (OD); (b) a body (16) with an ID and an OD substantially equal to those of the head (12); and (c) a neck (14) having an ID less than the ID, and an OD less than the OD, of the head (12) and body (16), providing a recessed robotic arm pick up area (90) adapted for engagement by automatic equipment. The combination (50) also includes a resilient plug (30) with (a) a base (36), (b) a top flange (32), and (c) a body (34) having an OD that corresponds to or is only slightly greater than the ID of the vial (10), assuring an interference fit between the plug (30) and the vial (10), thereby sealing the plug (30) inside the vial (10) upon insertion of the plug (30) in the vial (10).

## Description

The present invention relates generally to vial and closure systems and, more particularly, to those systems used in laboratory analytical techniques. Typically, these types of systems require a securely sealed closure or cap having a penetrable segment for introduction or withdrawal of material to or from a vial or container on which the cap is mounted. Such systems also require robotic engagement of the vial.

Chromatograghy is a laboratory technique for the separation and identification of chemical compounds in complex mixtures. Basically, it involves the flow of a mobile (gas or liquid) phase over a stationary phase (which may be a solid or a liquid). Liquid chromatograghy is used for soluble substances and gas (vapor phase) chromatograghy for volatile substances. As the mobile phase moves past the stationary phase, repeated adsorption and desorption of the solute occurs at a rate determined chiefly by its ratio of distribution between the two phases. If the ratio is large enough, the components of the mixture will move at different rates, producing a characteristic pattern, or chromatogragh, from which their identity can be determined.

A wide variety of vial and closure systems presently are in use in the chromatograghy market. Most of them require a combination of liners and closures for sealing. All known systems that are used in robotic handling instruments have restricted vial openings: the top opening inner diameter (or "ID") is smaller than the ID of the main body of the vial. Examples of such systems are illustrated in a brochure titled "Chromatograghy Products Profile" available since 1998 from J.G. Finneran Associates, Inc. of Vineland, New Jersey.

Many conventional containers have a standard snap cap and neck finish. In this basic snap cap design, the extended skirt of the cap secures under a protrusion on the neck of the vial upon sealing the container. The protrusion on the neck of conventional vials is of increased mass, therefore dimensional tolerance is not closely controlled during the molding process. Furthermore, the basic snap cap design does not allow for secure retention of the cap and the vial. Also, the conventional design of the snap cap does not provide for ease of assembling the cap and the vial or for ease of removing the cap from the vial. The snap cap requires the use of downward pressure to apply the cap and upward pressure to remove the cap. Such pressure typically is exerted by the thumb of the user. Advantageously, a snap is heard or felt when the cap is positioned and the container is sealed. No tools are required either to apply or to remove the cap.

The snap cap and container are typically made of plastic. This is advantageous because metal is undesirable in laboratory settings. The seal is consistent and provides an adequate short-term (about 8 hours) seal against solvent evaporation. Because the materials used to form the cap and container are not very rigid, however, the designs cannot provide a seal able to withstand contents under high pressure or provide for long-term storage without leakage. The characteristics of the snap cap design have limited use of that design in the chromatograghy market.

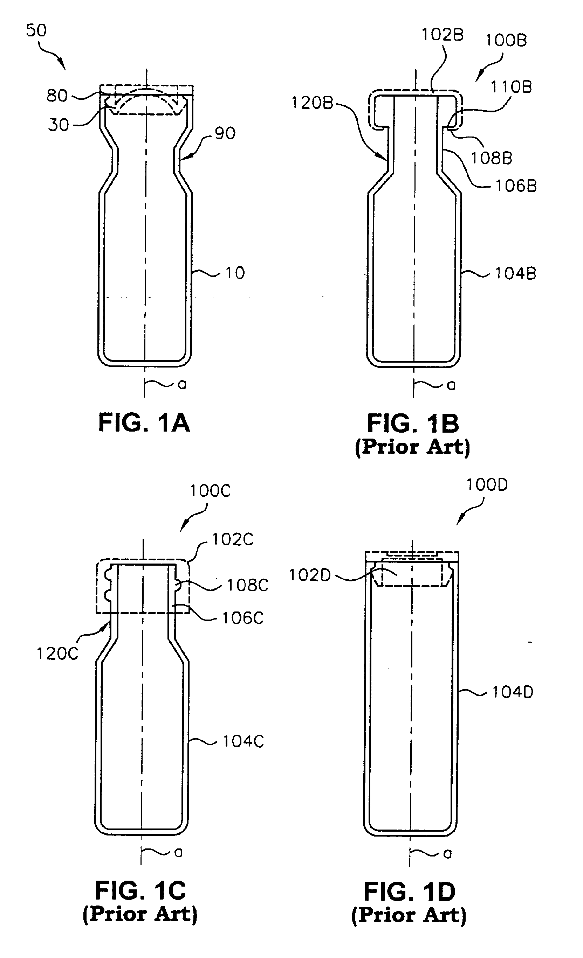

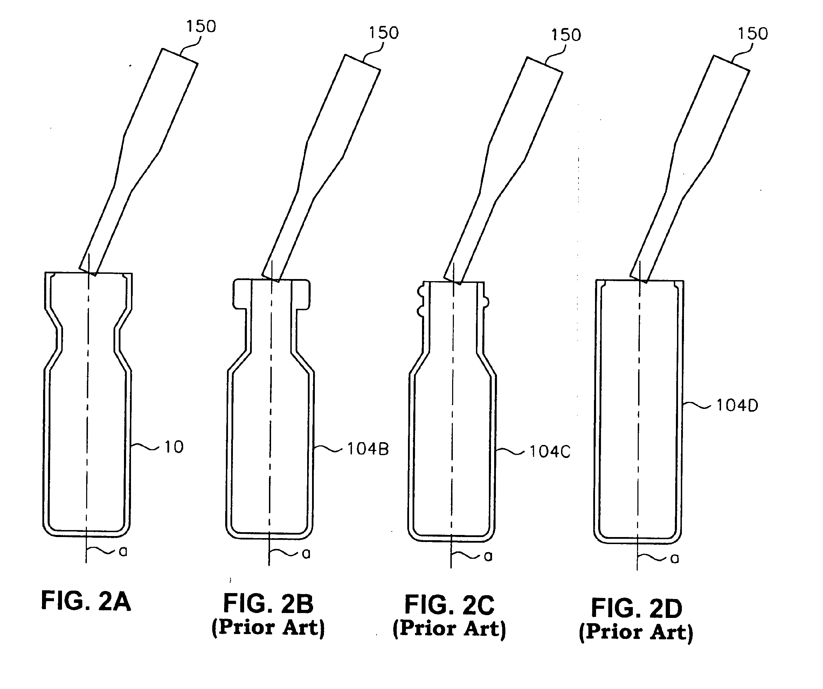

Instead, three other conventional vial and closure systems are more commonly found in use in the chromatograghy market. The first system 100B includes a crimp cap 102B and a vial 104B as illustrated in Fig. 1B. The crimp cap 102B is securely retained on the neck finish 106B of the (usually glass) vial 104B by crimping a metallic (usually aluminum) skirt 108B under a lip 110B on the neck of the vial 104B. One advantage of the aluminum crimp cap 102B is that it works on containers having either a standard crimp seal or a snap ring. Another advantage is that the neck finish 106B of the vial 104B has a robotic arm pick up area 120B adapted for engagement by automatic equipment. A disadvantage is that the ID of the vial 104B at its top is relatively small, rendering it somewhat difficult to fill the vial 104B using, for example and as illustrated in Fig. 2B, a pipette 150. Another disadvantage is that the aluminum crimp cap 102B requires the use of a crimping tool to form a seal. The seal is subject to the amount of squeeze and alignment given by the user. When properly applied, however, the aluminum crimp cap 102B provides a good seal against solvent evaporation.

Still another common closure system 100C for containers involves a standard screw thread neck finish 106C on a threaded vial 104C and a corresponding screw thread on a threaded cap 102C. Closure is attained and a seal obtained by twisting or rotating the threaded cap 102C onto the threads 108C of threaded vial 104C, as illustrated in Fig. 1C. Thus, screw thread closures require finger torque pressure to apply and remove the threaded cap 102C. The seal is subject to the amount of torque applied by the user. When torqued properly, the threaded cap 102C provides a good seal although not equivalent to the aluminum crimp seal. The neck finish 106C of the threaded vial 104C has a robotic arm pick up area 120C adapted for engagement by automatic equipment. One drawback is, however, that the threaded cap 102C can lose torque upon relaxation of the plastic material, from which the typical threaded cap 102C is made, which allows the threaded cap 102C to back off the screw thread 108C. In addition, the threaded cap 102C can only be used on threaded vials 104C. Like the standard crimp vial 104B, a disadvantage is that the ID of the threaded vial 104C at its top is relatively small, rendering it somewhat difficult to fill the vial using, for example and as illustrated in Fig. 2C, a pipette 150.

A vial and closure system 100D especially well adapted for use in the chromatograghy market is the combination of a plastic or glass shell vial 104D and a plastic plug 102D. As illustrated in Fig. 1D, the shell vial 104D is a simple cylindrical shell, having a substantially constant ID and OD along its entire length. This configuration offers advantages and disadvantages. Unfortunately, the shell vial 104D is not adapted for engagement by automatic equipment; it does not have a robotic arm pick up area. On the other hand, the ID of the top opening of the shell vial 104D is relatively large, facilitating the process of filling the shell vial 104D using, for example and as illustrated in Fig. 2D, a pipette 150. The shell vial 104D is also sealed easily and effectively by pushing the plug 102D into the top opening of the shell vial 104D.

To overcome the shortcomings of the conventional vial and closure systems used in the chromatograghy market, a new system is provided. An object of the present invention is to provide a versatile vial and plug system. A related object is to provide a vial and closure system that can function with robotic analytical instruments. Another object is to provide a system having relatively easy filling (pipetting), filtering, and capping characteristics.

To achieve these and other objects, and in view of its purposes, the present invention provides a versatile vial and plug combination adapted to form a securely sealed closure of the vial. The combination includes a vial with (a) a head defining a first chamber with a first inner diameter and a first outer diameter and extending between a top, with a center opening, and a lower shoulder, (b) a body defining a second chamber with a second inner diameter substantially equal to the first inner diameter and a second outer diameter substantially equal to the first outer diameter and extending between a base and an upper shoulder, and (c) a neck having an inner diameter less than the first inner diameter and an outer diameter less than the first outer diameter and extending between the lower shoulder of the head and the upper shoulder of the body, providing a recessed robotic arm pick up area adapted for engagement by automatic equipment. The combination also includes a resilient plug with (a) an inwardly tapered base, (b) a top flange, and (c) a body extending from the base to the top flange and having an outer diameter that corresponds to or is only slightly greater than the first inner diameter of the vial, assuring an interference fit between the plug and the vial, thereby sealing the plug inside the vial upon insertion of the plug in the vial.

It is to be understood that both the foregoing general description and the following detailed description are exemplary, but are not restrictive, of the invention.

The invention is best understood from the following detailed description when read in connection with the accompanying drawing. It is emphasized that, according to common practice, the various features of the drawing are not to scale. On the contrary, the dimensions of the various features are arbitrarily expanded or reduced for clarity. Included in the drawing are the following figures:
- Fig. 1A illustrates a vial and plug combination in accordance with the present invention;
- Fig. 1B illustrates a conventional crimp vial with its seal in place;
- Fig. 1C illustrates a conventional threaded vial with its closure in place;
- Fig. 1D illustrates a conventional shell vial with its plug in place;
- Fig. 2A illustrates the vial shown in Fig. 1A with the plug removed and as the vial is being filled using a pipette;
- Fig. 2B illustrates the crimp vial shown in Fig. 1B with the seal removed and as the vial is being filled using a pipette;
- Fig. 2C illustrates the threaded vial shown in Fig. 1C with the closure removed and as the vial is being filled using a pipette;
- Fig. 2D illustrates the shell vial shown in Fig. 1D with the plug removed and as the vial is being filled using a pipette;
- Fig. 3 is an expanded view of the vial and plug combination shown in Fig. 1A, with the plug illustrated in side view and separated from the vial illustrated in perspective view;
- Fig. 4 is a top view of the vial illustrated in Fig. 3;
- Fig. 5 is a cross-sectional view of the vial shown in Fig. 3, taken along the line 5-5 of Fig. 4;
- Fig. 6 is a side view of the vial shown in Fig. 3;
- Fig. 7 is a top view of the plug illustrated in Fig. 3;
- Fig. 8 is a cross-sectional view of the plug shown in Fig. 3, taken along the line 8-8 of Fig. 7;
- Fig. 9 is a side view of the plug shown in Fig. 3;
- Fig. 10A illustrates a tubular filter upon insertion into the vial of the present invention having an unfiltered solution;
- Fig. 10B illustrates the tubular filter shown in Fig. 10A in place within the vial as sealed by the plug of the present invention, yielding a filtered solution;
- Fig. 11A illustrates a hollow tubular filter upon insertion into the vial of the present invention having an unfiltered solution; and
- Fig. 11B illustrates the hollow tubular filter shown in Fig. 11A in place within the vial as sealed by the plug of the present invention, yielding a filtered solution.

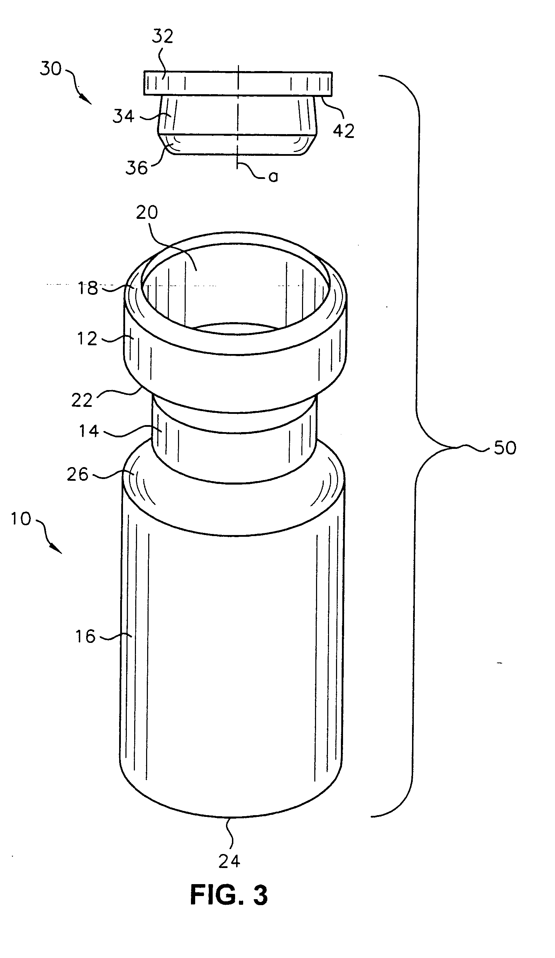

Referring now to the drawing, in which like reference numbers refer to like elements throughout, Fig. 3 shows the vial and plug combination 50 in accordance with the present invention. Vial and plug combination 50 includes a vial 10 and a resilient plug 30 having an axis, a. Vial 10 may be plastic or glass. Plug 30 is a resilient plastic.

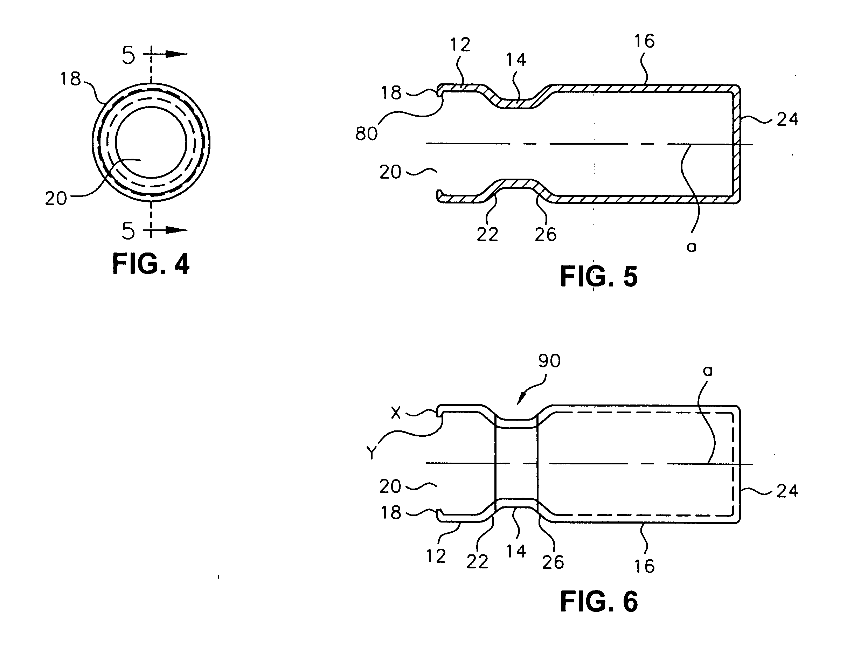

Now referring to details of vial 10 as better seen in Figs. 4-6, vial 10 has three (typically integral or monolithic) sections: a head 12 defining a first chamber, a body 16 defining a second chamber, and a neck 14 disposed between head 12 and body 16. Head 12 extends between a top 18, with a center opening 20, and a lower shoulder 22. Body 16 extends between a base 24 and an upper shoulder 26.

In one example embodiment, the walls of vial 10 are about 0.084 cm (0.033 inches) thick. The total length of vial 10 between base 24 and top 18 is about 3.188 cm (1.255 inches). The length of head 12, the distance between lower shoulder 22 and top 18, is about 0.533 cm (0.210 inches). The distance between upper shoulder 26 and top 18 is about 1.031 cm (0.406 inches).

The ID and outer diameter (or "OD") of the chambers defined by head 12 and body 16 are substantially equal. In the exemplary embodiment, the ID is about 0.965 cm (0.380 inches) and the OD is about 1.160 cm (0.457 inches). Neck 14 extends between lower shoulder 22 of head 12 and upper shoulder 26 of body 16, providing a recessed robotic arm pick up area 90 adapted for engagement by automatic equipment. This robotic arm pick up area 90 is highlighted in Fig. 1A. The ID and OD of neck 14 are substantially less than the ID and OD common to head 12 and body 16. In the exemplary embodiment, the OD of neck 14 is about 0.856 cm (0.337 inches).

In the embodiment of vial 10 shown in Fig. 1A, lower shoulder 22 and upper shoulder 26 are defined by sharp angles. It may be advantageous, however, to round those angles. Therefore, the alternative embodiment shown in Figs. 5 and 6 illustrates vial 10 having curved transitions between lower shoulder 22 of head 12 and neck 14 and between neck 14 and upper shoulder 26 of body 16.

Head 12 has a protrusion 80 adjacent top 18. In the exemplary embodiment, the length of protrusion 80 is about 0.079 cm (0.031 inches). Protrusion 80 functions to form a catch or undercut, facilitating retention of plug 30 in vial 10.

The relatively large ID of head 12, defined by the diameter of center opening 20 and the first chamber, in comparison to conventional vials, permits the user to fill vial 10 easily. Such filling is typically done using a pipette, as shown in Fig. 2A. This characteristic of vial 10 offers a major advantage over conventional vials, especially those used in chromatograghy applications.

As illustrated in Fig. 3, plug 30 has three (typically integral or monolithic) sections: a top flange 32, a body 34, and an inwardly tapered base 36. Plug 30 may be made of silicone rubber, butyl rubber, natural rubber or any other resilient material which can be used as molded or bonded to an inert material such as polytetrafluoroethylene (sold under the trademark Teflon of E.I. DuPont deNemours & Co., Inc. of Wilmington, Delaware). Polytetrafluoro-ethylene is "a highly stable thermoplastic tetrafluoroethylene homopolymer composed of at least 20,000 C₂F₄ monomer units linked into very long unbranched chains." Merck Index at 7560.

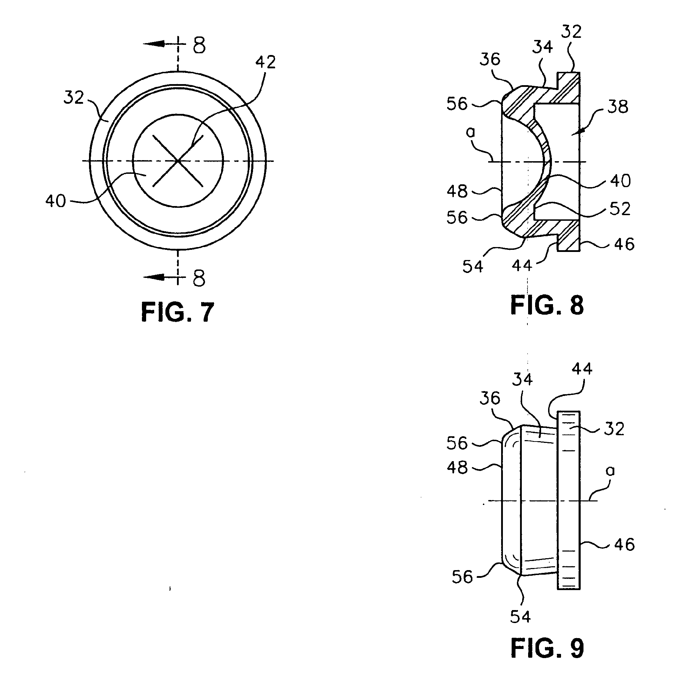

Now referring to details of plug 30 as best seen in Figs. 7-9, top flange 32 of plug 30 has an underside 44 and a central opening 38 in which is disposed a central, upraised button 40. Button 40 can be pierced with an instrument needle and reseal itself after retraction of the needle. In fact, plug 30 assures excellent resealability of vial and plug combination 50 after multiple needle penetrations. Button 40 can be provided with a slit 42 (preferably, but not essentially, an X-shaped slit) which permits plug 30 to be easily pierced with thin-walled instrument needles.

The taper of base 36 facilitates insertion of plug 30 into center opening 20 of vial 10. Thus, at its bottom, base 36 has an OD which is less than the ID of head 12 of vial 10. Body 34, the OD of which corresponds to or is only slightly greater than the ID of head 12 of vial 10, extends vertically upward from base 36 to top flange 32 and facilitates alignment of plug 30 and vial 10, as they are assembled. Although the OD of body 34 might be constant (i.e., body 34 may be substantially vertical and straight), it is preferable that body 34 have a slight outward angular taper. An angular shape allows for tolerance variations and assures an interference fit between plug 30 and vial 10, thereby sealing plug 30 inside vial 10.

In the exemplary embodiment, the thickness of button 40, at least at its center, is about 0.051 cm (0.02 inches). The diameter of central opening 38 is about 0.813 cm (0.320 inches). The length of flange 32 is about 0.152 cm (0.06 inches) and the width of flange 32, which also defines the maximum width of plug 30, is about 1.207 cm (0.475 inches).

The length of plug 30 between the top 46 and the bottom 48 (i.e., the overall length of plug 30) is about 0.559 cm (0.220 inches) in the exemplary embodiment. The length between top 46 and the flat portion 52 of button 40 is about 0.330 cm (0.130 inches). The length between bottom 48 and the junction 54, between body 34 and base 36, is about 0.152 cm (0.060 inches). The diameter of base 36 is about 1.029 cm (0.405 inches) and the diameter of the base 36 between apical points 56 is about 0.770 cm (0.303 inches). Finally, the diameter of plug 30 at the points where underside 44 contacts body 34 is about 1 cm (0.390 inches).

In practice, the user aligns base 36 of plug 30 with center opening 20 of head 12 of vial 10 and pushes downward on plug 30. The resultant downward movement of plug 30 toward vial 10 causes body 36 of plug 30 to engage the walls of head 12 of vial 10 defining the first chamber. The downward force overcomes the friction generated by the interference fit and is maintained by the user until underside 44 of top flange 32 contacts top 18 of head 12. At that point, plug 30 is fully inserted into vial 10. A tactile (and, at least on occasion, an audible) seating informs the user that insertion has been completed.

Thus, vial and plug combination 50 permits ease of sealing vial 10 by simply pushing plug 30 into the ID of head 12 of vial 10. The integrity of the seal between vial 10 and plug 30 provides another advantage to vial and plug combination 50. Specifically, in-house tests conducted with a volatile solvent showed evaporation loss equivalent to that of a crimped aluminum seal. Given the excellent sealing properties, assured by multiple interference contacts between body 34 of plug 30 and points x and y of vial 10 (see Fig. 6), vial and plug combination 50 can be used in long-term storage.

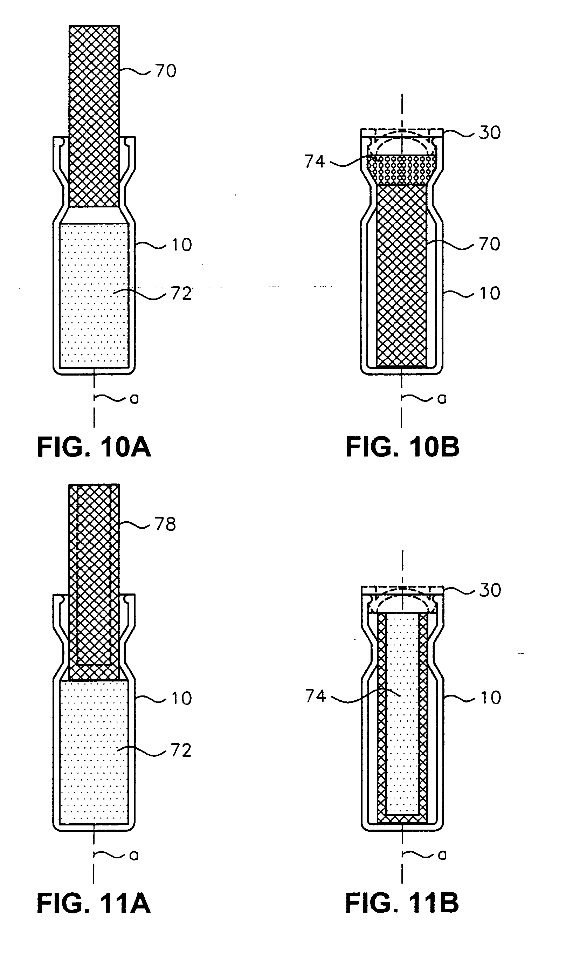

Typically, in chromatograghy applications, the user must fill a syringe with solution, attach a filter, and then fill the vial. Three, separate components are required (namely a syringe, a plunger, and a filter) to obtain a filtered solution. Vial and plug combination 50 gives the user the ability to filter solutions in vial 10 by simply pressing a tubular filter 70 or a hollow tubular filter 78 (with one end closed) into vial 10. Figs. 10A and 11A illustrate tubular filter 70 and hollow tubular filter 78, respectively, upon insertion into vial 10 having an unfiltered solution 72. As shown in Figs. 10B and 11B, tubular filter 70 and hollow tubular filter 78, respectively, are in place within vial 10 as sealed by plug 30, yielding a filtered solution 74. Therefore, vial and plug combination 50 offers improved economy: the conventional three-piece syringe, plunger, and filter are replaced with one unit.

## Claims

1. A versatile vial and plug combination (50) adapted to form a securely sealed closure between a resilient plug (30) comprising [a] a base (36), [b] a top flange (32), and [c] a body (34) extending from the base to the top flange and a vial (10) comprising [a] a head (12) defining a first chamber with a first inner diameter and a first outer diameter and extending between a top (18), with a center opening (20), and a lower shoulder (22), [b] a body (16) defining a second chamber with a second inner diameter and a second outer diameter and extending between a base (24) and an upper shoulder (26), and [c] a neck (14) extending between the lower shoulder of the head and the upper shoulder of the body, the combination **characterized in that**:
- the second inner diameter of the body of the vial is substantially equal to the first inner diameter of the head of the vial and the second outer diameter of the body of the vial is substantially equal to the first outer diameter of the head of the vial;
- the neck of the vial has an inner diameter less than the first inner diameter and an outer diameter less than the first outer diameter, providing a recessed robotic arm pick up area (90) adapted for engagement by automatic equipment; and
- the body of the resilient plug has an outer diameter that corresponds to or is only slightly greater than the first inner diameter of the vial, assuring an interference fit between the plug and the vial, thereby sealing the plug inside the vial upon insertion of the plug in the vial.

2. The versatile vial and plug combination as recited in claim 1 further comprising a filter (70, 78) adapted for insertion into the vial before insertion of the plug in the vial.

3. The versatile vial and plug combination as recited in claim 1 wherein multiple interference contacts (x, y) exist between the body of the plug and the vial upon insertion of the plug in the vial.

4. The versatile vial and plug combination as recited in claim 1 wherein the base of the plug is tapered inwardly to facilitate insertion of the plug in the vial.

5. The versatile vial and plug combination as recited in claim 1 wherein the body of the plug has an outward angular taper.

6. The versatile vial and plug combination as recited in claim 1 wherein the plug has a button (40) made of a material that can be pierced by an instrument and resealed after removal of the instrument.

7. The versatile vial and plug combination as recited in claim 1 wherein the plug has a button (40) with a slit (42) permitting the plug to be pierced by an instrument and resealed after removal of the instrument.

8. The versatile vial and plug combination as recited in claim 1 wherein the flange of the plug has an underside (44) contacting the top of the head of the vial when the plug is fully inserted into the vial.

9. The versatile vial and plug combination as recited in claim 1 wherein the head has a protrusion (80) adjacent the top, the protrusion facilitating retention of the plug in the vial upon insertion of the plug into the vial.

10. The versatile vial and plug combination as recited in claim 1 wherein a first transition exists between the lower shoulder and the neck and a second transition exists between the neck and the upper shoulder, the transitions being formed by sharp angles.

11. The versatile vial and plug combination as recited in claim 1 wherein a first curved transition exists between the lower shoulder and the neck and a second curved transition exists between the neck and the upper shoulder.

12. The versatile vial and plug combination as recited in claim 1 wherein the vial is one of plastic or glass.

13. The versatile vial and plug combination as recited in claim 1 wherein the resilient plug is made of a material selected from the group consisting of rubber and plastic.

14. The versatile vial and plug combination as recited in claim 13 wherein the resilient plug is also made of polytetrafluoroethylene.
